# EUROPEAN PATENT APPLICATION

(11) **EP 4 488 708 A1**
(43) Date of publication of application: **08.01.2025**
(21) Application number: 24186767.0
(22) Date of filing: 05.07.2024
(51) Int. Cl.: G01S 5/02

(54) **POSITIONING APPROACH**

(30) Priority: 07.07.2023 GB 202310456
(71) Applicant: Nokia Technologies Oy, 02610 Espoo (FI)
(72) Inventor: CHEN, Chung Shue, Sceaux (FR); BARACCA, Paolo, Munich (DE); DE PANAFIEU, Elie, Paris (FR); MICHALOPOULOS, Diomidis, Munich (DE)
(74) Representative: Nokia EPO representatives

(57) **Abstract**

Embodiments of the present disclosure relate to a positioning approach. In an aspect, an apparatus obtains identities (IDs) assigned to L terminal devices, wherein the L terminal devices are assigned with K different IDs based on positions of the L terminal devices such that a group of N IDs identify a position range, at least one ID among the K different IDs is assigned to two or more terminal devices among the L terminal devices, and K is less than L; and receives, from N terminal devices among the L terminal devices, N IDs of the N terminal devices, the N IDs and positions of the N terminal devices being for determining a position of a target device, the target device being in the position range identified by the group of the N IDs. The embodiments of the present disclosure can minimize activator power to transmit an activation signal.

## Description

### FIELD

Various example embodiments relate to the field of communications and in particular, to methods, a terminal device, apparatuses and a computer readable storage medium for a positioning approach.

### BACKGROUND

In the communications area, there is a constant evolution ongoing in order to provide efficient and reliable solutions for utilizing wireless communication networks. Each new generation has it owns technical challenges for handling the different situations and processes that are needed to connect and serve devices connected to the wireless network. To meet the demand for wireless data traffic having increased since deployment of 4th generation (4G) communication systems, efforts have been made to develop an improved 5th generation (5G) or pre-5G communication system. The new communication systems can support various types of service applications for terminal devices.

In recent communication technologies, regarding IoT (Internet of things) applications, 3GPP (3rd generation partnership project) has specified NB-IoT/eMTC and NR RedCap before Rel-18 to satisfy requirements on low cost and low power devices for wide area IoT communications. These IoT devices usually consume tens or hundreds of milliwatts power during transmitting or receiving, while the cost is a few dollars. However, to achieve the internet of everything, IoT devices with ten or even a hundred times lower cost and power consumption are needed, especially for a large number of applications requiring battery-less devices.

### SUMMARY

In general, example embodiments of the present disclosure provide a solution for positioning.

In a first aspect, there is provided an apparatus. The apparatus comprises at least one processor; and at least one memory including computer program codes; the at least one memory and the computer program codes are configured to, with the at least one processor, cause the apparatus to obtain identities (IDs) assigned to L terminal devices, wherein the L terminal devices are assigned with K different IDs based on positions of the L terminal devices such that a group of N IDs identify a position range, at least one ID among the K different IDs is assigned to two or more terminal devices among the L terminal devices, and K is less than L; and receive, from N terminal devices among the L terminal devices, N IDs of the N terminal devices, the N IDs and positions of the N terminal devices being for determining a position of a target device, the target device being in the position range identified by the group of the N IDs.

In a second aspect, there is provided an apparatus. The apparatus comprises at least one processor; and at least one memory including computer program codes; the at least one memory and the computer program codes are configured to, with the at least one processor, cause the apparatus to assign K different identities (IDs) to L terminal devices based on positions of the L terminal devices such that a group of N IDs of N terminal devices identify a position range, wherein at least one ID among the K different IDs is assigned to two or more terminal devices among the L terminal devices, and K is less than L.

In a third aspect, there is provided a terminal device. The terminal device comprises at least one processor; and at least one memory including computer program codes; the at least one memory and the computer program codes are configured to, with the at least one processor, cause the device to provide, to an apparatus, an identity (ID) of the terminal device, wherein the terminal device is one of N terminal devices activated by the activation signal among L terminal devices, the L terminal devices are assigned with K different IDs based on positions of the L terminal devices such that a group of N IDs identify a position range, at least one ID among the K different IDs is assigned to two or more terminal devices among the L terminal devices, and K is less than L.

In a fourth aspect, there is provided a method implemented at an apparatus. The method comprises obtaining, at the apparatus, identities (IDs) assigned to L terminal devices, wherein the L terminal devices are assigned with K different IDs based on positions of the L terminal devices such that a group of N IDs identify a position range, at least one ID among the K different IDs is assigned to two or more terminal devices among the L terminal devices, and K is less than L; and receiving, from N terminal devices among the L terminal devices, N IDs of the N terminal devices, the N IDs and positions of the N terminal devices being for determining a position of a target device, the target device being in the position range identified by the group of the N IDs.

In a fifth aspect, there is provided a method implemented at an apparatus. The method comprises assigning, at the apparatus, K different identities (IDs) to L terminal devices based on positions of the L terminal devices such that a group of N IDs of N terminal devices identify a position range, wherein at least one ID among the K different IDs is assigned to two or more terminal devices among the L terminal devices, and K is less than L.

In a sixth aspect, there is provided a method implemented at a terminal device. The method comprises providing, at the terminal device and to an apparatus, an identity (ID) of the terminal device, wherein the terminal device is one of N terminal devices activated by the activation signal among L terminal devices, the L terminal devices are assigned with K different IDs based on positions of the L terminal devices such that a group of N IDs identify a position range, at least one ID among the K different IDs is assigned to two or more terminal devices among the L terminal devices, and K is less than L.

In a seventh aspect, there is provided an apparatus comprising means for obtaining identities (IDs) assigned to L terminal devices, wherein the L terminal devices are assigned with K different IDs based on positions of the L terminal devices such that a group of N IDs identify a position range, at least one ID among the K different IDs is assigned to two or more terminal devices among the L terminal devices, and K is less than L; and means for receiving, from N terminal devices among the L terminal devices, N IDs of the N terminal devices, the N IDs and positions of the N terminal devices being for determining a position of a target device, the target device being in the position range identified by the group of the N IDs.

In an eighth aspect, there is provided an apparatus comprising means for assigning K different identities (IDs) to L terminal devices based on positions of the L terminal devices such that a group of N IDs of N terminal devices identify a position range, wherein at least one ID among the K different IDs is assigned to two or more terminal devices among the L terminal devices, and K is less than L.

In a ninth aspect, there is provided an apparatus comprising means for providing, to an apparatus, an identity (ID) of a terminal device, wherein the terminal device is one of N terminal devices activated by the activation signal among L terminal devices, the L terminal devices are assigned with K different IDs based on positions of the L terminal devices such that a group of N IDs identify a position range, at least one ID among the K different IDs is assigned to two or more terminal devices among the L terminal devices, and K is less than L.

In a tenth aspect, there is provided a non-transitory computer readable medium comprising program instructions for causing an apparatus to perform at least the method according to any one of the above fourth to sixth aspect.

In an eleventh aspect, there is provided a computer program comprising instructions, which, when executed by an apparatus, cause the apparatus at least to: obtain identities (IDs) assigned to L terminal devices, wherein the L terminal devices are assigned with K different IDs based on positions of the L terminal devices such that a group of N IDs identify a position range, at least one ID among the K different IDs is assigned to two or more terminal devices among the L terminal devices, and K is less than L; and receive, from N terminal devices among the L terminal devices, N IDs of the N terminal devices, the N IDs and positions of the N terminal devices being for determining a position of a target device, the target device being in the position range identified by the group of the N IDs.

In a twelfth aspect, there is provided a computer program comprising instructions, which, when executed by an apparatus, cause the apparatus at least to: assign K different identities (IDs) to L terminal devices based on positions of the L terminal devices such that a group of N IDs of N terminal devices identify a position range, wherein at least one ID among the K different IDs is assigned to two or more terminal devices among the L terminal devices, and K is less than L.

In a thirteenth aspect, there is provided a computer program comprising instructions, which, when executed by an apparatus, cause the apparatus at least to: provide, to an apparatus, an identity (ID) of the terminal device, wherein the terminal device is one of N terminal devices activated by the activation signal among L terminal devices, the L terminal devices are assigned with K different IDs based on positions of the L terminal devices such that a group of N IDs identify a position range, at least one ID among the K different IDs is assigned to two or more terminal devices among the L terminal devices, and K is less than L.

In a fourteenth aspect, there is provided an apparatus. The apparatus comprises obtaining circuitry configured to obtain identities (IDs) assigned to L terminal devices, wherein the L terminal devices are assigned with K different IDs based on positions of the L terminal devices such that a group of N IDs identify a position range, at least one ID among the K different IDs is assigned to two or more terminal devices among the L terminal devices, and K is less than L; and receiving circuitry configured to receive, from N terminal devices among the L terminal devices, N IDs of the N terminal devices, the N IDs and positions of the N terminal devices being for determining a position of a target device, the target device being in the position range identified by the group of the N IDs.

In a fifteenth aspect, there is provided an apparatus. The apparatus comprises assigning circuitry configured to assign K different identities (IDs) to L terminal devices based on positions of the L terminal devices such that a group of N IDs of N terminal devices identify a position range, wherein at least one ID among the K different IDs is assigned to two or more terminal devices among the L terminal devices, and K is less than L.

In a sixteenth aspect, there is provided an apparatus. The apparatus comprises providing circuitry configured to provide, to an apparatus, an identity (ID) of the terminal device, wherein the terminal device is one of N terminal devices activated by the activation signal among L terminal devices, the L terminal devices are assigned with K different IDs based on positions of the L terminal devices such that a group of N IDs identify a position range, at least one ID among the K different IDs is assigned to two or more terminal devices among the L terminal devices, and K is less than L.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
Fig. 1A illustrates an example system in which embodiments of the present disclosure may be implemented;
Fig. 1B illustrates a comparative diagram of a cellular IoT, a RFID, and 6G B-IoT technologies;
Fig. 1C illustrates a schematic diagram of some positioning schemes;
Fig. 2 illustrates a flowchart illustrating a process for positioning according to some embodiments of the present disclosure;
Fig. 3 illustrates a schematic diagram of positioning of some embodiments of the present disclosure;
Fig. 4 illustrates a schematic diagram of positioning of some other embodiments of the present disclosure;
Fig. 5 illustrates a schematic diagram of positioning of some further embodiments of the present disclosure;
Fig. 6 illustrates a schematic diagram of positioning of some further embodiments of the present disclosure;
Fig. 7 illustrates a schematic diagram of tags arrangement of some embodiments of the present disclosure;
Fig. 8 illustrates a schematic diagram of tags arrangement of some other embodiments of the present disclosure;
Fig. 9 illustrates a schematic diagram of positioning of some further embodiments of the present disclosure;
Fig. 10 illustrates a flowchart of a method implemented at a first apparatus according to some embodiments of the present disclosure;
Fig. 11 illustrates a flowchart of a method implemented at a second apparatus according to some embodiments of the present disclosure;
Fig. 12 illustrates a flowchart of a method implemented at a terminal device according to some embodiments of the present disclosure;
Fig. 13 illustrates a simplified block diagram of an apparatus that is suitable for implementing embodiments of the present disclosure; and
Fig. 14 illustrates a block diagram of an example computer readable medium in accordance with some embodiments of the present disclosure;

Throughout the drawings, the same or similar reference numerals represent the same or similar element.

### DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) , sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

The embodiments of the present disclosure involve a positioning approach which can exploit ambient IoT deployments in controlled environments. Accordingly, ambient IoT will be introduced first in the following.

During the pre-meeting email discussion for Rel-18, it was observed that, there is a common interest in the IoT technology supporting battery-less devices, that in 3GPP goes under the name of "Ambient IoT". The objective is to support B-IoT/ambient tags, i.e., devices that modulates an incoming signal with some information which is conveyed to a receiving node via backscatter reflection. At a minimum, this information contains the ID of the tag, but can also include information from attached sensors. Differently from RFID systems, 3GPP plans to consider multi-static architectures, made by the following nodes: an activator: a node, e.g., a UE or a gNB or a TRP (transmission and reception point), that sends an activation signal targeted at waking up the tag; a B-IoT/ambient tag: a device that modulates the received activation signal to transmit some information; a reader, potentially a different entity from the activator: a node, e.g., a UE or a gNB or a TRP, that receives the signal sent by the B-IoT tag. Two types of tags are commonly assumed: passive tags: very simple devices, battery-less, just able to backscatter the activator signal; semi-passive: simple devices, battery-assisted (but still with a battery that does not need to be changed or re-charged), capable to harvest energy also from other sources, e.g., photo, termo or piezo.

It is expected that ambient IoT communications can be beneficial to several use cases, for instance: utility metering (e.g., energy/water usage); environmental sensing (e.g., temperature/humidity monitoring, flooding); machine-specific monitoring (e.g., machine status, parking meter data, vending machine inventory); static and mobile asset tracking (e.g., in industrial and warehouse environments).

In fact, from [RP-222733: Ambient IoT study on use cases and requirements, Nokia, 3GPP TSG RAN#98e, Dec. 2022]: the density of such ambient IoT device deployment can be expected to be many orders of magnitudes higher compared to any known 3GPP deployment. Thus, a key element for such deployment is the localization of ambient IoT devices. It is not only required to know the identity of the ambient IoT device and to communicate with the device, but equally important is knowledge of the position of the ambient IoT device.

Next, positioning in 5G and 6G (6th generation) will be introduced. Positioning has been an important topic in 5G, and a lot of work has been done in particular in Rel. 16, targeting different scenarios like MBB (mobile broadband), IIoT (Industrial IoT), and V2X (vehicle-to-everything). Several features were introduced, e.g.: downlink positioning reference signals (PRS) to support downlink based positioning methods; a new entity, the Location Management Function (LMF), that manages and controls the request of the UEs and delivers the positioning related assistance information to the UEs over the LTE Positioning Protocol (LPP); a new protocol, the NR positioning protocol A (NRPPa) to carry the positioning information between radio access network and the LMF.

3GPP is still working on the topic looking at other aspects like sidelink positioning and positioning integrity. Moreover, positioning has been an important topic in cellular networks from the very beginning in the mid-nineties, as originally introduced to meet requirements for emergency calls, and it is expected to play an important role also in 6G networks. Currently, a topic under study in 6G is indeed joint communications and sensing (JCAS), where devices operate like a radar system and are capable to sense the environment while communicating, without transmitting dedicated reference signals as PRS (positioning reference signals).

Expecting in future 6G networks a high density of ambient IoT tags, it may be desirable to leverage Ambient IoT for better positioning methods. For example, in certain controlled environments like a factory hall, the factory owner may actually deploy a massive number of these very cheap ambient IoT tags, whose position is then known (somehow differently from current 3GPP work/objective in 5G-Advanced [RP-222733 mentioned above] where tag location is not known and needs to be determined), and exploits these tags to determine the position of other devices like moving robots or AGVs (automated guided vehicles).

All previous works are looking at different scenarios and frameworks, for example, there is a huge literature on positioning exploiting reference signals sent by BS or UEs, that fits somehow 5G positioning framework, but cannot be reused in the scenario of the embodiments of the present disclosure, as no any reference signal is involved in the scenario of the embodiments of the present disclosure. In addition, there is also an increasing literature on JCAS, that seems to become a relevant topic also for 5G-Advanced, but again the framework is different as it does not exploit the expected large deployments of ambient IoT devices. Other technologies have also been proposed, for example light-based positioning. On the other hand, those schemes typically suffer the limitations of a) requiring LOS (line of sight) conditions and b) being applicable only in indoor deployments. The scheme of the present disclosure may be used both in indoor and outdoor deployments, with as well NLOS (non-line-of-sight) conditions. In the embodiments of the present disclosure, a solution is provided for optimizing the ambient IoT tag deployment such that the power used by the activator to transmit the activation signal is minimized.

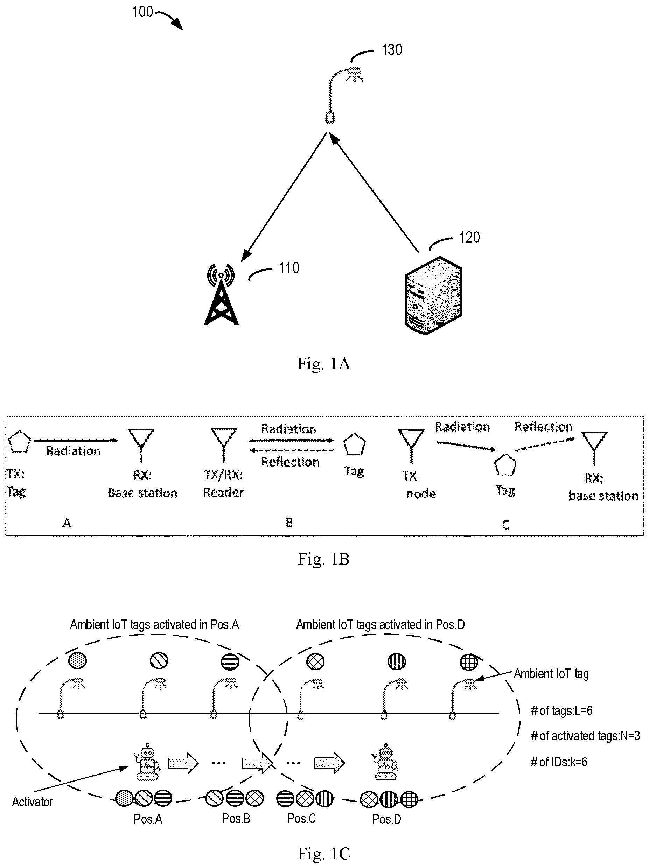

Principles and embodiments of the present disclosure will be described in detail below with reference to the accompanying drawings. Reference is first made to Fig. 1A, which illustrates an example system 100 in which embodiments of the present disclosure may be implemented. The system 100 includes a plurality of apparatuses, such as a first apparatus 110 and a second apparatus 120. The system 100 may further include a plurality of terminal devices 130. In Fig. 1A, one terminal device 130 is shown as an example. In some embodiments, the first apparatus 110 may be a reader, specifically, may be a terminal device (e.g. a UE) different from the terminal device 130, or may be an access network device (e.g. a gNB or a base station). In Fig. 1A, the access network device is shown as an example of the first apparatus. In some embodiments, the second apparatus 120 may be a server for assigning a plurality of identities (IDs) to a plurality of terminal devices 130. In some embodiments, the terminal device 130 may provide its ID to the first apparatus 110.

It is to be understood that the number of apparatuses and terminal devices is only for the purpose of illustration without suggesting any limitations. The system 100 may include any suitable number of apparatuses and terminal devices adapted for implementing embodiments of the present disclosure.

Communications in the system 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

Fig. 1B illustrates a comparative diagram of a cellular IoT, a RFID (radio frequency identification), and 6G B-IoT (Backscatter IoT) technologies. As mentioned above, multi-static architecture is different from conventional cellular IoT and RFID, "A" in Fig. 1B shows a case of a traditional cellular IoT in which active radio is used. "B" in Fig. 1B shows a case of RFID in which backscatter radio and monostatic architecture are used. "C" in Fig. 1B shows a case of 6G B-IoT proposal in which backscatter radio and multi-static architecture are used.

Fig. 1C illustrates a schematic diagram of some positioning schemes. In this scenario, there is a reference device (i.e. target device) whose position needs to be determined. The reference device may be, e.g., a moving robot, that acts as an activator, i.e., it sends a low power activation signal. A reader could also be the moving robot itself, and the reader may receive back the ID from the tags nearby via backscattering, and then the reader may determine the position of the reference device based on the tag IDs. Similar to 5G positioning, this ambient IoT method, although can be used in an effective way also in outdoor environments, it is expected to be very useful mainly in indoor deployments (where GNSS (global navigation satellite system) systems typically struggle). On the other hand, while with 5G positioning, reference signals may need to be transmitted toward a UE or a gNB that can be 100 m away, thus requiring high transmit power, the activation signal sent by the moving robot can be very low power as the high density of ambient IoT tags in the area is exploited.

In Fig. 1C above, a very basic solution for the ambient IoT deployment is shown, in this scheme, it is assumed that each tag has its own ID, which is different from any other deployed tag. However, if the number of tags is very large (imagine for example a factory hall of dimension 100×100m, where 1 tag every 1m² is deployed, thus resulting in 10,000 tags), also the number of bits used to represent the tag ID is large, thus for example requiring higher transmit power at the moving robot to enable backscattering at the ambient IoT tags. Considering the factory hall example just above, with 10,000 tags, there are at least 14 bits (as 2¹³<10,000<2¹⁴) needed to assign different IDs to all the tags.

As shown in Fig. 1C, as an example, there are L=6 tags and each tag has its own ID (represented by a different pattern). The activator in each position will activate N=3 tags due to the proximity. The activator's location can be differentiated due to the distinct N activated tags in each position (Pos. A, B, C, D). The number of the tag IDs is k=6, i.e. k=L=6. However, it can be seen that the assignment of L different IDs to the L tags is an overuse, not optimal such that the power used by the activator to transmit the activation signal is excessive.

In the embodiments of the present disclosure, the ambient IoT tag deployment may be optimized such that the power used by the activator to transmit the activation signal is minimized. For example, in some solutions of the embodiments, just 3 bits be used, then the power necessary by the activator to get the ID of the tags via backscattering will be strongly reduced. In some embodiments, a method to minimize the number of used IDs may be designed, for example, assigning the same ID to ambient IoT tags that are positioned in different areas of the deployment environment, e.g., a factory hall. The designed and deployed method may allow determining in a unique way a UE position, when such UE sends an activation signal to activate the ambient IoT tags in its surroundings. The UE is just an example of the activator, and it may be implemented any target device to be positioned.

Reusing the same ID allows minimizing the total number of IDs used in the deployment area, with, as a consequence, energy saving at the activator/reference device whose position needs to be determined, as it will need less power/energy to activate these ambient IoT tags. The schemes of the present disclosure will be further described in the embodiments below.

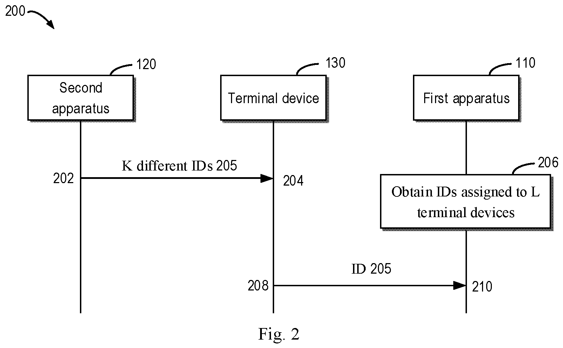

Reference is now made to Fig. 2, which shows a process 200 for positioning according to an embodiment of the present disclosure. For the purpose of discussion, the process 200 will be described with reference to Fig. 1A. The process 200 may involve the terminal device 130 and the first apparatus 110 and the second apparatus 120 as illustrated in Fig. 1A.

In the process 200, the second apparatus 120 may assign (202) K different identities (IDs) 205 to L terminal devices 130 based on positions of the L terminal devices 130 such that a group of N IDs 205 of N terminal devices 130 identify a position range, wherein at least one ID 205 among the K different IDs 205 is assigned to two or more terminal devices 130 among the L terminal devices 130, and K is less than L. Accordingly, each of the L terminal devices 130 may receive (204) assigned ID 205.

In some embodiments, the L terminal devices 130 may be L tags, for example L ambient IoT tags. In some embodiments, the first apparatus 110 may be a reader, specifically, the reader may be a terminal device (e.g. a target device to be positioned, it may be a UE, or a robot, or other target device) or an access network device (e.g. a gNB, or another access network device). In some embodiments, the second apparatus 120 may be a core network device (e.g. a Location management function (LMF)) or an information station (e.g. a server). In some embodiments, the target device may be referred to as an activator for sending an activation signal.

For the second apparatus 120, the second apparatus 120 may broadcast the IDs 205 of the L terminal devices 130, or provide, to the first apparatus 110 or a further apparatus configured to determine a position of a target device, the IDs 205 of the L terminal devices 130 via an interface of the second apparatus 120, or provide, to the first apparatus 110 and based on inquiry from the first apparatus 110, the IDs 205 of the L terminal devices 130 through a signaling or a communication protocol between the first apparatus 110 and the second apparatus 120.

The first apparatus 110 may obtain (206) identities (IDs) 205 assigned to L terminal devices 130. With reference to the functions of the second apparatus 120 described above, on the first apparatus side, in some examples, the first apparatus 110 may obtain, from the second apparatus 120 configured to assign the K different IDs 205 to the L terminal devices 130, the IDs 205 of the L terminal devices 130 broadcasted by the second apparatus. In some examples, the first apparatus 110 may obtain, from the second apparatus 120, the IDs 205 of the L terminal devices 130 via an interface of the second apparatus 120. In some examples, the first apparatus 110 may inquire, from the second apparatus 120, the IDs 205 of the L terminal devices 130 through a signaling or a communication protocol between the first apparatus 110 and the second apparatus 120. In some examples, the first apparatus 110 may obtain the IDs 205 of the L terminal devices 130 pre-stored in the first apparatus 110. The one or more of the examples above may be combined to be implemented.

In order to have a device/UE position determined by the reader, specifically, in some examples, some sharing of the ID grid between such server and the reader will be described in details below. When the reader is itself a device/UE, the sharing of the ID grid happens over a wireless link (considering also that "updates" may have been done to the ID grid, for example when tags are added or removed for different reasons). Different interfaces can be used for such sharing, depending on which nodes are involved, for example, if the network element storing the ID grid is the LMF (an example of the core network device) and the reader is a gNBBS (an example of the access network device), then the ID grid could be shared over NRPPa interface. If the network element storing the ID grid is the LMF and the reader is a device/UE, then the ID grid could be shared over LPP interface. In some embodiments, a different method without involving any core network function could use just the Application interface. It is noted that there are different means to actually perform such sharing of the ID grid, for example in the case that the reader is itself a device/UE, and in some examples, the ID grid may be broadcasted by the network periodically, so that the devices/UEs can detect it. In some examples, the device/UE may inquire the network or an information station(s) when needed (e.g., on demand or real-time) through a signaling or communication protocol between the device/UE and network. In some examples, the ID grid may be stored or saved in the memory of the device/UE in advance.

As mentioned above, the first apparatus 110 may be a terminal device (different from the terminal device 130) or an access network device. For the case that the first apparatus 110 is an access network device, for example, the first apparatus 110 may be a gNB or a BS (base station). For the case that the first apparatus 110 is a terminal device, the first apparatus may be the target device or another terminal device different from the target device (also different from the terminal device 130). In some examples, the first apparatus, i.e. a reader, is itself a device/UE (potentially also that same target device/UE (as an activator) for which the position needs to be determined). In such examples, the first apparatus 110 may transmit an activation signal to the N terminal devices 130.

For any of N terminal devices 130 activated by the activation signal among the L terminal devices 130, the terminal device 130 may provide (208) its ID 205 to the first apparatus 110. The terminal device 130 may provide its ID in various ways. Specifically, in some examples, the terminal device 130 may provide the ID 205 via a backscattered signal generated by the terminal device 130 through backscattering an activation signal from a target device. In some examples, the terminal device 130 may transmit the ID 205 via a transmitted signal generated by the terminal device 130 based on receiving the activation signal. In some examples, the terminal device 130 may transmit the ID via a signal actively transmitted by the terminal device. One or more examples above may be combined to be implemented.

On the first apparatus 110 side, the first apparatus 110 may receive (210), from the N terminal devices 130 among the L terminal devices 130, N IDs 205 of the N terminal devices 130. In some embodiments, the first apparatus 110 may receive the N IDs 205 via backscattered signals generated by the N terminal devices 130 through backscattering an activation signal from the target device. In some embodiments, the first apparatus 110 may receive the N IDs 205 via transmitted signals generated by the N terminal devices 130 based on receiving the activation signal. In some embodiments, the first apparatus 110 may receive the N IDs 205 via signals actively transmitted by the N terminal devices 130. One or more embodiments above may be combined to be implemented.

The N IDs 205 and positions of the N terminal devices 130 may be used for determining a position of a target device. The target device is in the position range identified by the group of the N IDs 205. In some embodiments, determination of the position of the target device may be implemented at the first apparatus 110, that is, the first apparatus 110 may determine the position of the target device based on the N IDs 205 and the positions of the N terminal device 205. In some embodiments, determination of the position of the target device may be implemented at the further apparatus configured to determine the position of the target device, in such embodiments, the first apparatus 110 may transmit, to the further apparatus, the obtained IDs 205 assigned to the L terminal devices 130 and the received N IDs 205 of the N terminal devices 130, so that the further apparatus may determine the position of the target device based on the N IDs 205 and the positions of the N terminal device 205. Alternatively, the further apparatus may obtain, from the second apparatus 120, the IDs 205 of the L terminal devices 130 via an interface of the second apparatus 120, and the first apparatus 110 may transmit, to the further apparatus, the received N IDs 205 of the N terminal devices 130, so that the further apparatus may determine the position of the target device based on the N IDs 205 and the positions of the N terminal device 205. The position of the target device determined may be an accurate position or an inaccurate position (error is allowed) in the corresponding position range.

In some embodiments, the K different IDs are assigned to the L terminal devices such that a value of the K is minimized. In addition, the IDs 205 of the L terminal devices 130 may be arranged in various ways, for example, the IDs 205 of the L terminal devices 130 may be arranged in a line, and the group of N IDs may be continuous N IDs, or in some other examples, the IDs 205 of the L terminal devices 130 may be arranged in a grid, and the group of N IDs may be a subgrid corresponding to the position range.

In some embodiments, two groups of N IDs may be the same, there can be other method that allow distinguishing to the group, for example, in an example scenario, two gNBs are deployed in the factory hall, and it is known to which gNB the target device is connected. The two groups having the same N IDs are in different coverage areas, for example group 1 in the coverage area of gNB 1 and group 2 in the coverage area of gNB 2. Knowing to which gNB the target device is connected, allows distinguishing between the two groups. In another example scenario, there is only 1 gNB, but for example RSRP measurements from the target device can be exploited to distinguish if the target device is "close" or "far" from the gNB. The two groups having the same N IDs are one "close" to the gNB, and the other "far" from the gNB. Knowing RSRP measurements (or similar) from the target device allows distinguishing among the two groups. There may be various ways to distinguish two groups, and the embodiments of the present disclosure are not limited thereto.

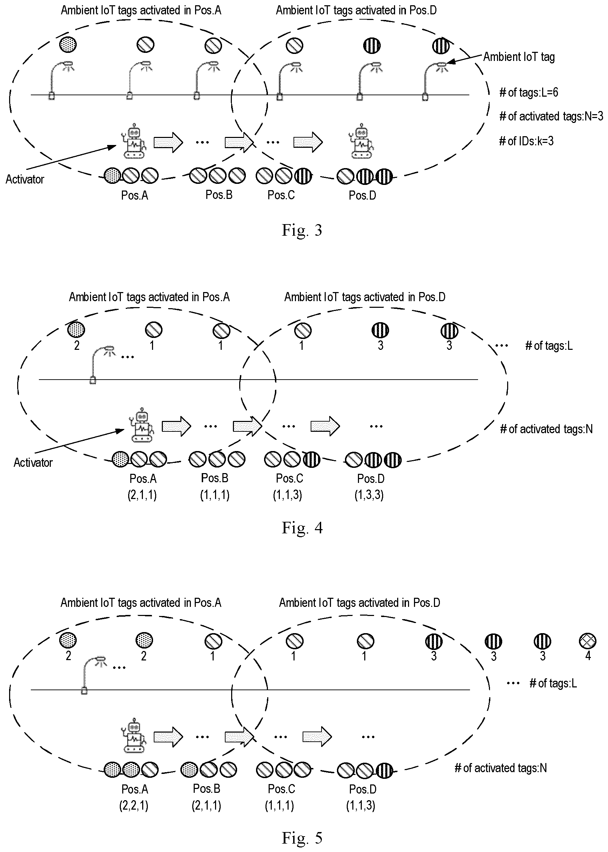

For some scenarios in which the IDs 205 of the L terminal devices 130 are arranged in a line, some examples are as shown in Fig. 3, Fig. 4, and Fig. 5 below. Fig. 3 illustrates a schematic diagram of positioning of some embodiments of the present disclosure. Fig. 3 shows an example of ambient IoT deployment with L=6 tags, and N=3 tags are activated by an activator in each position, and K=3<L IDs, the N=3 tags may uniquely identify the activator position. The tag IDs are represented by different patterns respectively, and the tag IDs are reused in an optimized way.

In ambient IoT deployment with L tags, N tags being activated by the activator in each position and K IDs being assigned among the L tags, to be more explicit, in the following discussion the IDs are denoted by a set of different letters {'1', '2', '3', ..., 'K'}. With reference to Fig. 4, Fig. 4 illustrates a schematic diagram of positioning of some other embodiments of the present disclosure. In the example shown in Fig. 4, L = 12 (6 of them are shown, and the others are omitted and not shown), N = 3, and the number of IDs is minimized such that K = 3, instead of 12. In these examples, the L tags are arranged in a line, for example, 21 1 1 3 3 3 222 1 3, in which (2,1,1) corresponds to position A, (1,1,1) corresponds to position B, (1,1,3) corresponds to position C, and (1,3,3) corresponds to position D.

Fig. 5 illustrates a schematic diagram of positioning of some further embodiments of the present disclosure. In these examples, L = 22 (9 of them are shown, and the others are omitted and not shown), N = 3, and the number of IDs may be minimized such that k = 4, instead of 22. The L tags are arranged in a line, for example, 221 1 1 3 3 3 44 4 2 2 2 3 4 1 4 1 2 3 3, in which (2,2,1) corresponds to position A, (2,1,1) corresponds to position B, (1,1,1) corresponds to position C, and (1,1,3) corresponds to position D. It should be noted that k = 4 is necessary and sufficient for identifying the activator position without ambiguity.

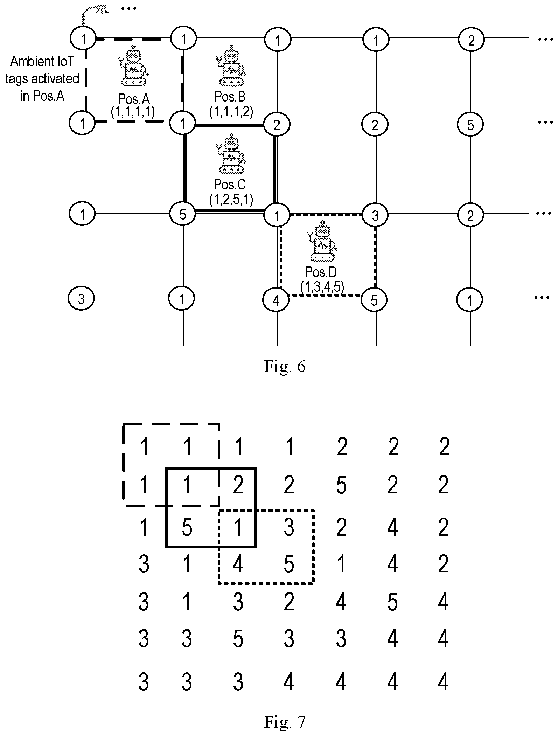

The above embodiments consider L tags deployed on a line. In some embodiments, the tags may be deployed in a M dimensional grid, in which M may be 2, or 3, or a larger positive integer. In 2D examples of Fig. 6, Fig. 7 and Fig. 8 below, it is assumed that the total number of terminal devices (e.g. tags) to be L² (organized in a L×L grid), and similarly the activated tags are N² (organized in a N×N grid). In the following example, with reference to Fig. 6, Fig. 6 illustrates a schematic diagram of positioning of some further embodiments of the present disclosure. The M dimensional grid may be a 2-D grid, L may be 7 (the total number of the tags is 7 × 7=49), and N may be 2 (a group of 2 × 2=4 IDs identify a position range). Fig. 6 shows a part of the L × L = 7 × 7 grid. In these examples, tags as in a grid of size L × L = 7 × 7. The number of activated tags is N × N = 2 × 2. The number of IDs may be minimized such that K = 5, instead of 49. In this example, 49 tags are assigned with 5 different IDs, and 4 IDs identify a position range. The tags are arranged as shown in Fig. 7. It is noted that k = 5 is necessary and sufficient for identifying the activator position without ambiguity. In some example scenarios, the method proposed in the embodiments of the present disclosure may be used for positioning purpose in a factory hall. The tag IDs can be (re-)programmed by the user of the grid, for example the factory owner.

As discussed above, for some scenarios, there are a large number of ambient IoT tags are deployed, according to the scheme of the embodiments above, IDs are reused in an optimized way, such that a target device/UE (that acts as activator) activates a small subset of them which backscatters their ID to the reader, which eventually is able to determine the position of such target device/UE. The outcome of the method is then an ID grid, which associates the IDs with the location of the Ambient IoT tags. An example of such ID grid is illustrated in Fig. 6 above.

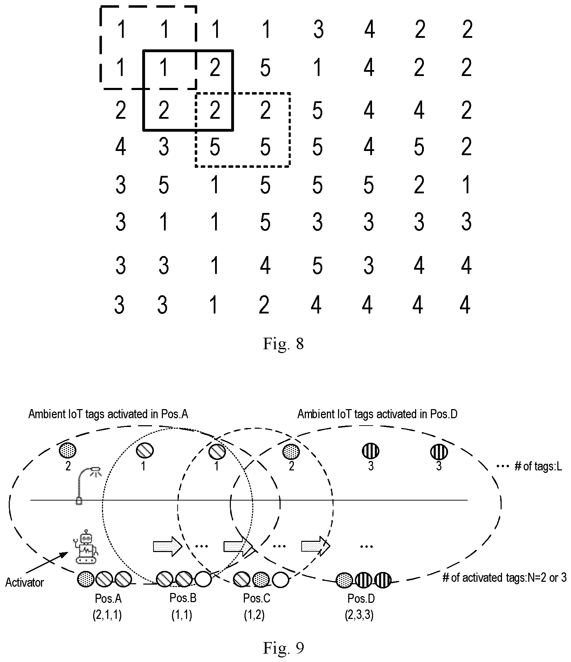

In some further embodiments, similar to the example above, it is assumed that the total number of terminal devices (e.g. tags) to be L² (organized in a L×L grid), and similarly the activated tags are N² (organized in a N×N grid). The L may be 8, accordingly, Grid of size L × L = 8 × 8. The number of activated tags: N × N = 2 × 2. A group of 2 × 2=4 IDs identify a position range. The number of IDs may be minimized such that K = 5, instead of 64. The tags may be arrange as shown in Fig. 8. It is noted that K = 5 is necessary and sufficient for identifying the activator position without ambiguity.

In some example scenarios above, there may be a grid in a certain controlled environment of L ambient IoT tags, where L (the total number of tags) is a very large number. For the grid, the positions and the IDs of these L tags are known. There is a device/ an activator to be determined the position, and the device/ the activator may send a low power activation signal, which is received by the nearest N tags (the N is a number of activated tags) backscattering their IDs, with N<<L (the L is the total number of tags). There may be a reader. In some examples the reader may be the device/ the activator itself, and the reader may receive the IDs of these N tags, and, as it knows their position, it can estimate its own position as well. The scheme of the embodiments of the present disclosure may minimize the number of IDs K spent in this scenario with L tags and with an activator signal received just by the nearest N<<L tags. K may be determined by any of algorithms described below. The key of the algorithm is that, because the activator receives the IDs from the nearest N tags, the optimization makes sure that the IDs are assigned, as a function of the tag locations, such that the group of N tag IDs is unique, i.e., it identifies the activator position without ambiguity.

In some embodiments, for the group of N IDs 205 of N terminal devices 130 identify a position range, for example, the embodiments shown in Fig. 3, Fig. 4, and Fig. 5, a value of the N (the number of IDs in a group of IDs) is constant, for example N=3. The embodiments shown in Fig. 6, Fig. 7, and Fig. 8, the number of IDs in a group of IDs is 4.

In some other embodiments, the value of the N may be variable for different position ranges. As shown in Fig. 9, Fig. 9 illustrates a schematic diagram of positioning of some further embodiments of the present disclosure. As shown in Fig. 9, in some embodiments, the N may not be a constant. When the number of activated tags N is not a constant, for example, N =2 or 3, as shown in Fig. 9, the strongest code may be used, i.e., for the lowest value of N. That is, the optimization makes sure that the IDs are assigned such that each group of 2 tag IDs is unique. One might otherwise adopt an even stronger code similar to error correction code concept that the IDs are assigned such that any 2 tag IDs in each group is unique. It should be noted that some algorithms herein, for example, the SWMC (Sliding window multiset code) greedy algorithm and backtracking algorithm below may adapt to those variants. In the case "The grid is not regular", when the grid is not regular, i.e., some tags are more densely located whereas other tags are less densely located, such that the number of activated tags is not always the same, the problem can be modelled in a similar way as earlier, i.e., with N not a constant or even time varying. That is, the strongest code may be used, i.e., for the lowest value of N. For example, the SWMC greedy algorithm and backtracking algorithm below are applied.

The algorithms mentioned herein may be referred to as SWMC algorithm (SWMC for short), and it is an algorithm that, given some constraints on the integers L, N and k, outputs an L × L grid (as an example) where each position receives an ID in the set {1, 2, ..., k} and such that no two N × N subgrids correspond to the same multiset of IDs. The smaller the value of k is, the better. An offline algorithm is required. There are many ways to design an SWMC algorithm. Several examples are presented below.

Example algorithm 1: Greedy algorithm. An SWMC algorithm may be designed based on a greedy approach. The input is L and N. Visiting the positions of the grid in some order (for example, following a spiral starting at the center of the grid) and assigning to the visited position the smallest ID possible, while ensuring that all ID multisets corresponding to N × N subgrids remain unique. The value of k is then equal to the maximal ID used by the algorithm. The pseudo-code of this algorithm in a Python syntax is shown below.

### Greedy algorithm pseudo-code

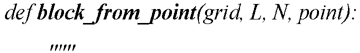

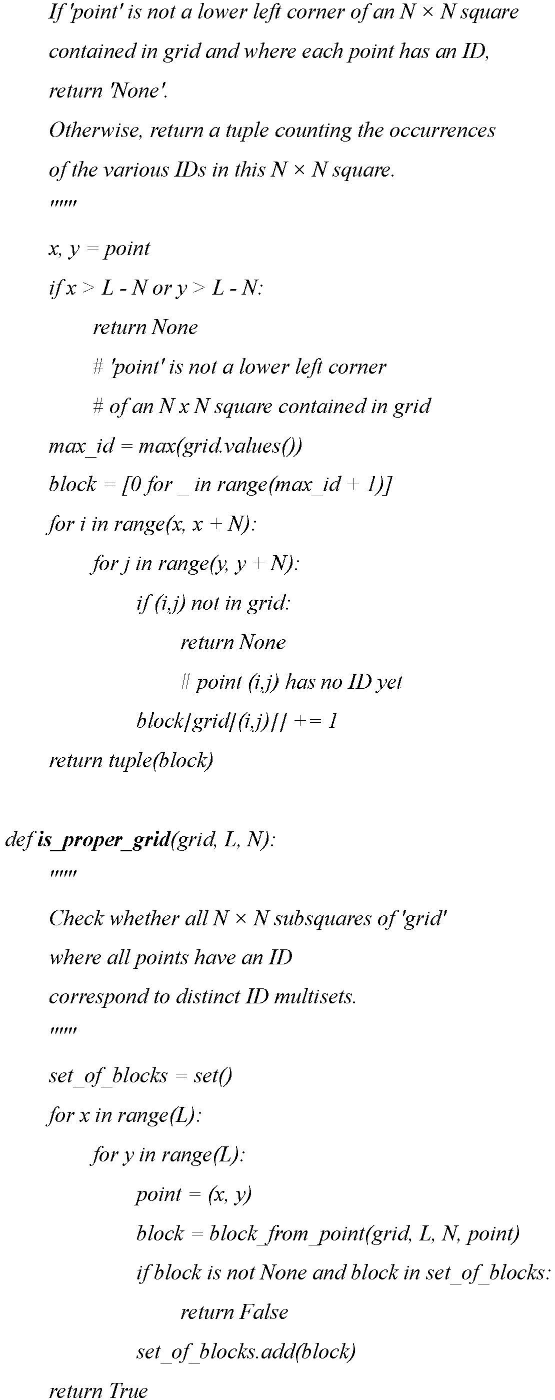

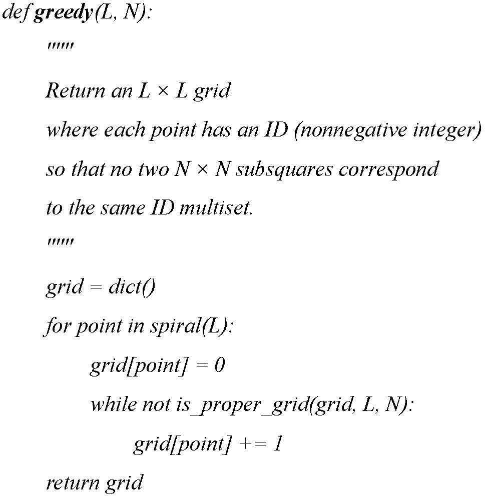

Example algorithm 2: Backtracking algorithm. An SWMC algorithm may be designed based on backtracking. The input is L, N and k. The output is either an L × L grid satisfying the constraints, or a message signaling that no such grid exists. Each position of the L × L grid is visited in some order (spiral for example) and an ID from {1, ..., k} is assigned to it. Whenever a position cannot be assigned an ID because two N × N subgrids would then correspond to the same multi set of IDs, the algorithm backtracks to change the ID of the previously visited position. The complexity of this algorithm grows exponentially with L due to the backtracking. In practice, a limit is set on the number of backtracks of the algorithm. If the grid L × L is not constructed by then, the output of the algorithm is inconclusive.

Example algorithm 3: Tic-tac-toe algorithm. An SWMC algorithm may be designed based on a mathematical construction rather than extensive computations. It inputs two integers j and M. Let C denote the largest integer not greater than sqrt(binomial(M², j - 1)). The output of the algorithm is the usual SWMC output, with N = 2M - 1, k = 9j and L = 3MC. The construction is as follows. The meta grid is defined as a 3C × 3C grid where each position (x, y) has a "type", which is a pair of two integers, each in the set {0, 1, 2}, computed as (x mod 3, y mod 3). There are thus 9 different types. The k = 9j IDs are partitioned into 9 disjoint subsets of size j, and assign each to a different type. The subset of IDs corresponding to type (i, j) is denoted by S(i, j). For each of the 9 types (i, j), the following operations are performed. There are C² positions of the meta grid of each type (i, j). Since C² is not greater than binomial (M², j - 1), there exists at least C² distinct multi sets of size M² whose elements are taken in S(i, j). Each position (x, y) of type (i, j) of the meta grid is assigned with one of those multisets, denoted by D(x, y). The final L × L grid is obtained from the meta grid by subdividing each position of the meta grid into an M × M grid. The M × M grid corresponding to position (x, y) of the meta grid receives IDs in an arbitrary pattern using the multi set C(x, y). This construction is correct, because each N × N subgrid of the L × L grid contains entirely exactly one position from the meta grid, and can identify it uniquely based on the colors from C(x, y). Note that this algorithm has the advantage of being computationally much more efficient than the backtracking algorithm.

It should be noted that in some schemes, a construction of sliding window codes was proposed which however requires knowing the order of the IDs in order to distinguish (thus can identify the activator position without ambiguity). Different from these schemes, in the embodiments of the present disclosure, the order of the IDs may be unknown, i.e., activated tag IDs {1, 2, 5,1} is considered the same as {1, 1, 2, 5}. Thus, these schemes cannot be applied here to solve the problem which is solved by the embodiments of the present disclosure.

The naive algorithm assigns a unique ID to each tag, thus, for example in the 2-D grid case in Fig. 6, requiring L² IDs in total. Each tag then receives an ID of approximately 2 log(L) bits. However, the number of bits transmitted by each tag can be reduced by applying the schemes described in present disclosure, saving energy. Various algorithms and theoretical bounds are used, and in a table below the number of bits used by each tag for the SWMC approach above and the naive approach for several values of L and N are compared. It may be observed that the SWMC approach requires significantly less bits per tag than the naive algorithm.

**Table 1**

| L | N | Number of bits per tag | | |
|---|---|---|---|---|
| | | Lower bound SWMC | Upper bound SWMC | naive algorithm |
| 100 | 3 | 3 | 4.3 | 13.2 |
| 200 | 20 | 1.6 | 1.6 | 15.3 |
| 4128 | 16 | 2.3 | 2.3 | 24 |
| 15499 | 3 | 5 | 10.0 | 27.9 |

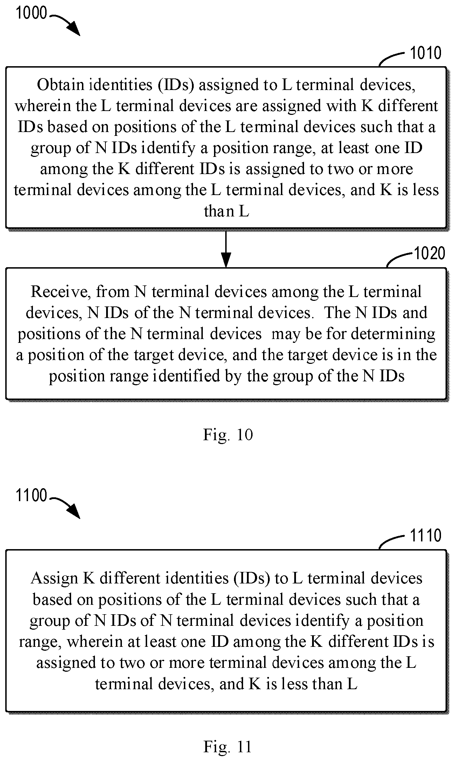

Fig. 10 illustrates a flowchart of a method implemented at the first apparatus 110 according to some embodiments of the present disclosure. As shown in Fig. 10, in a method 1000, at block 1010, the first apparatus 110 may obtain identities (IDs) assigned to L terminal devices 130, wherein the L terminal devices 130 are assigned with K different IDs based on positions of the L terminal devices 130 such that a group of N IDs identify a position range, at least one ID among the K different IDs is assigned to two or more terminal devices 130 among the L terminal devices 130, and K is less than L.

At block 1020, the first apparatus 110 may receive, from N terminal devices 130 among the L terminal devices 130, N IDs of the N terminal devices 130. The N IDs and positions of the N terminal devices 130 may be for determining a position of the target device, and the target device is in the position range identified by the group of the N IDs.

In some embodiments, the first apparatus 110 may obtain the IDs assigned to the L terminal devices 130 by one or more ways below: obtaining, from a second apparatus configured to assign the K different IDs to the L terminal devices 130, the IDs of the L terminal devices 130 broadcasted by the second apparatus 120; obtaining, from the second apparatus 120, the IDs of the L terminal devices 130 via an interface of the second apparatus 120; inquiring, from the second apparatus 120, the IDs of the L terminal devices 130 through a signaling or a communication protocol between the first apparatus 110 and the second apparatus 120; or obtaining the IDs of the L terminal devices 130 pre-stored in the first apparatus 110.

In some embodiments, in order to receive the N IDs, the first apparatus 110 may receive the N IDs via backscattered signals generated by the N terminal devices 130 through backscattering an activation signal from the target device; or receive the N IDs via transmitted signals generated by the N terminal devices 130 based on receiving the activation signal; or receive the N IDs via signals actively transmitted by the N terminal devices 130; or any combination thereof.

In some embodiments, prior to receiving the N IDs from the N terminal devices 130, the first apparatus 110 may transmit the activation signal to the N terminal devices 130.

In some embodiments, the K different IDs may be assigned to the L terminal devices 130 further such that a value of the K is minimized.

In some embodiments, the first apparatus 110 may determine the position of the target device based on the N IDs and the positions of the N terminal device 130. Additionally, or alternatively, the first apparatus 110 may transmit, to a further apparatus for determining the position of the target device, the obtained IDs assigned to the L terminal devices 130 and the received N IDs of the N terminal devices 130. Additionally, or alternatively, the first apparatus 110 may transmit, to the further apparatus, the received N IDs of the N terminal devices 130.

In some embodiments, a value of the N is constant or variable for different position ranges.

In some embodiments, the IDs of the L terminal devices 130 may be arranged in a line, and the group of N IDs may be continuous N IDs. Alternatively, the IDs of the L terminal devices 130 may be arranged in a grid, and the group of N IDs may be a subgrid corresponding to the position range.

In some embodiments, the L terminal devices 130 may be L tags, the first apparatus 110 may be a terminal device (different from the terminal device 130) or an access network device, and the second apparatus 120 may be a core network device or an information station.

Fig. 11 illustrates a flowchart of a method implemented at the second apparatus 120 according to some embodiments of the present disclosure. As shown in Fig. 11, in a method 1100, at block 1110, the second apparatus 120 may assign K different identities (IDs) to L terminal devices 130 based on positions of the L terminal devices 130 such that a group of N IDs of N terminal devices 130 identify a position range, wherein at least one ID among the K different IDs is assigned to two or more terminal devices 130 among the L terminal devices 130, and K is less than L.

In some embodiments, the K different IDs may be assigned to the L terminal devices 130 further such that a value of the K is minimized.

In some embodiments, a value of the N may be constant or variable for different position ranges.

In some embodiments, the second apparatus 120 may broadcast the IDs of the L terminal devices; or provide, to the first apparatus 110 or a further apparatus configured to determine a position of a target device, the IDs of the L terminal devices 130 via an interface of the second apparatus 120; or provide, to the first apparatus 110 and based on inquiry from the first apparatus 110, the IDs of the L terminal devices 130 through a signaling or a communication protocol between the first apparatus 110 and the second apparatus 120; or any combination thereof.

In some embodiments, the IDs of the L terminal devices 130 may be arranged in a line, and the group of N IDs may be continuous N IDs. In some other embodiments, the IDs of the L terminal devices 130 may be arranged in a grid, the group of N IDs being a subgrid corresponding to the position range.

In some embodiments, the L terminal devices 130 may be L tags, the first apparatus 110 may be a terminal device or an access network device, and the second apparatus 120 may be a core network device or an information station.

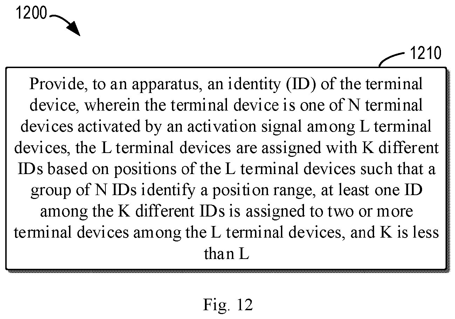

Fig. 12 illustrates a flowchart of a method implemented at the terminal device 130 according to some embodiments of the present disclosure. As shown in Fig. 12, in a method 1200, at block 1210, the terminal device 130 may provide, to an apparatus (for example, the first apparatus 110), an identity (ID) of the terminal device 120, wherein the terminal device 130 is one of N terminal devices 130 activated by an activation signal among L terminal devices 130, the L terminal devices 130 are assigned with K different IDs based on positions of the L terminal devices 130 such that a group of N IDs identify a position range, at least one ID among the K different IDs is assigned to two or more terminal devices 130 among the L terminal devices 130, and K is less than L.

In some embodiments, the terminal device 130 may provide the ID by at least one of the following: providing the ID via a backscattered signal generated by the terminal device through backscattering an activation signal from a target device; transmitting the ID via a transmitted signal generated by the terminal device based on receiving the activation signal; or transmitting the ID via a signal actively transmitted by the terminal device.

In some embodiments, an apparatus capable of performing any of the method 1000 (for example, the first apparatus) may comprise means for performing the respective steps of the method 1000. The means may be implemented in any suitable form. For example, the means may be implemented in a circuitry or software module.

In some embodiments, the apparatus comprises means for obtaining identities (IDs) assigned to L terminal devices, wherein the L terminal devices are assigned with K different IDs based on positions of the L terminal devices such that a group of N IDs identify a position range, at least one ID among the K different IDs is assigned to two or more terminal devices among the L terminal devices, and K is less than L; and means for receiving, from N terminal devices among the L terminal devices, N IDs of the N terminal devices, the N IDs and positions of the N terminal devices being for determining a position of a target device, the target device being in the position range identified by the group of the N IDs.

In some embodiments, the apparatus is a first apparatus, and the means for obtaining the IDs assigned to the L terminal devices comprises at least one of the following: means for obtaining, from a second apparatus configured to assign the K different IDs to the L terminal devices, the IDs of the L terminal devices broadcasted by the second apparatus; means for obtaining, from the second apparatus, the IDs of the L terminal devices via an interface of the second apparatus; means for inquiring, from the second apparatus, the IDs of the L terminal devices through a signaling or a communication protocol between the first apparatus and the second apparatus; or means for obtaining the IDs of the L terminal devices pre-stored in the first apparatus.

In some embodiments, the means for receiving the N IDs comprises at least one of the following: means for receiving the N IDs via backscattered signals generated by the N terminal devices through backscattering an activation signal from the target device; means for receiving the N IDs via transmitted signals generated by the N terminal devices based on receiving the activation signal; or means for receiving the N IDs via signals actively transmitted by the N terminal devices.

In some embodiments, the apparatus is the target device and further comprises means for, prior to receiving the N IDs from the N terminal devices, transmit the activation signal to the N terminal devices.

In some embodiments, the K different IDs are assigned to the L terminal devices further such that a value of the K is minimized.

In some embodiments, the apparatus further comprises at least one of the following: means for determining the position of the target device based on the N IDs and the positions of the N terminal device; means for transmitting, to a further apparatus for determining the position of the target device, the obtained IDs assigned to the L terminal devices and the received N IDs of the N terminal devices; or means for transmitting, to the further apparatus, the received N IDs of the N terminal devices.

In some embodiments, a value of the N is constant or variable for different position ranges.

In some embodiments, the IDs of the L terminal devices are arranged in a line, and the group of N IDs comprise continuous N IDs; or in a grid, and the group of N IDs is a subgrid corresponding to the position range.

In some embodiments, the L terminal devices may be L tags, the first apparatus may be a terminal device or an access network device, and the second apparatus may be a core network device or an information station.

In some embodiments, the apparatus further comprises means for performing other steps in some embodiments of the method 1000. In some embodiments, the means comprises at least one processor; and at least one memory including computer program code, the at least one memory and computer program code configured to, with the at least one processor, cause the performance of the apparatus.

In some embodiments, an apparatus capable of performing any of the method 1100 (for example, the second apparatus 120) may comprise means for performing the respective steps of the method 1100. The means may be implemented in any suitable form. For example, the means may be implemented in a circuitry or software module.

In some embodiments, the apparatus comprises means for assigning K different identities (IDs) to L terminal devices based on positions of the L terminal devices such that a group of N IDs of N terminal devices identify a position range, wherein at least one ID among the K different IDs is assigned to two or more terminal devices among the L terminal devices, and K is less than L.

In some embodiments, the K different IDs are assigned to the L terminal devices further such that a value of the K is minimized.

In some embodiments, a value of the N is constant or variable for different position ranges.

In some embodiments, the apparatus is a second apparatus, and the second apparatus further comprises at least one of the following: means for broadcasting the IDs of the L terminal devices; means for providing, to a first apparatus or a further apparatus configured to determine a position of a target device, the IDs of the L terminal devices via an interface of the second apparatus; means for providing, to the first apparatus and based on inquiry from the first apparatus, the IDs of the L terminal devices through a signaling or a communication protocol between the first apparatus and the second apparatus.

In some embodiments, the IDs of the L terminal devices are arranged in a line, and the group of N IDs are continuous N IDs; or in a grid, and the group of N IDs are a subgrid corresponding to the position range.

In some embodiments, the L terminal devices are L tags, the first apparatus is a terminal device or an access network device, and the second apparatus is a core network device or an information station.

In some embodiments, the apparatus further comprises means for performing other steps in some embodiments of the method 1100. In some embodiments, the means comprises at least one processor; and at least one memory including computer program code, the at least one memory and computer program code configured to, with the at least one processor, cause the performance of the apparatus.

In some embodiments, an apparatus capable of performing any of the method 1200 (for example, the terminal device 130) may comprise means for performing the respective steps of the method 1200. The means may be implemented in any suitable form. For example, the means may be implemented in a circuitry or software module.

In some embodiments, the apparatus comprises means for providing, to an apparatus, an identity (ID) of the terminal device, wherein the terminal device is one of N terminal devices activated by an activation signal among L terminal devices, the L terminal devices are assigned with K different IDs based on positions of the L terminal devices such that a group of N IDs identify a position range, at least one ID among the K different IDs is assigned to two or more terminal devices among the L terminal devices, and K is less than L.

In some embodiments, the means for providing the ID comprises at least one of the following: means for providing the ID via a backscattered signal generated by the terminal device through backscattering an activation signal from a target device; means for transmitting the ID via a transmitted signal generated by the terminal device based on receiving the activation signal; or means for transmitting the ID via a signal actively transmitted by the terminal device.

In some embodiments, the apparatus further comprises means for performing other steps in some embodiments of the method 1200. In some embodiments, the means comprises at least one processor; and at least one memory including computer program code, the at least one memory and computer program code configured to, with the at least one processor, cause the performance of the apparatus.

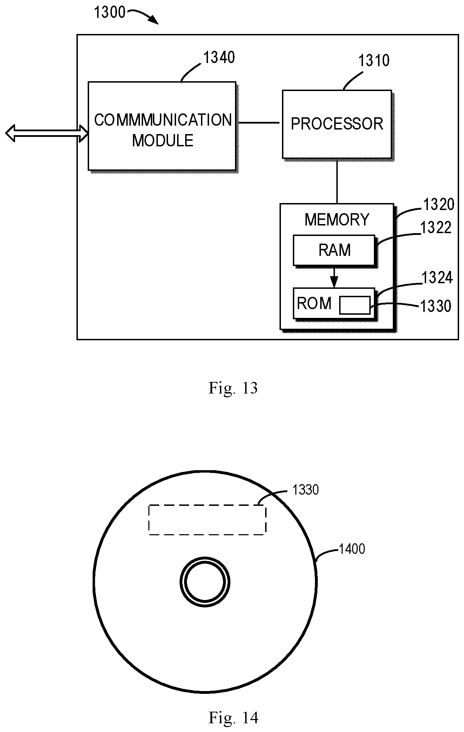

Fig. 13 is a simplified block diagram of a device 1300 that is suitable for implementing embodiments of the present disclosure. The device 1300 may be provided to implement the communication device, for example the apparatus 110, the apparatus 120 or the terminal device 130 as shown in Fig. 1A. As shown, the device 1300 includes one or more processors 1310, one or more memories 1320 coupled to the processor 1310, and one or more communication modules 1340 coupled to the processor 1310.

The communication modules 1340 are for bidirectional communications. The communication modules 1340 have at least one antenna to facilitate communication. The communication interface may represent any interface that is necessary for communication with other network elements.

The processor 1310 may be of any type suitable to the local technical network and may include one or more of the following: general purpose computers, special purpose computers, microprocessors, digital signal processors (DSPs) and processors based on multicore processor architecture, as non-limiting examples. The device 1300 may have multiple processors, such as an application specific integrated circuit chip that is slaved in time to a clock which synchronizes the main processor.

The memory 1320 may include one or more non-volatile memories and one or more volatile memories. Examples of the non-volatile memories include, but are not limited to, a Read Only Memory (ROM) 1324, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 1322 and other volatile memories that will not last in the power-down duration.

A computer program 1330 includes computer executable instructions that are executed by the associated processor 1310. The program 1330 may be stored in the ROM 1324. The processor 1310 may perform any suitable actions and processing by loading the program 1330 into the RAM 1322.

The embodiments of the present disclosure may be implemented by means of the program 1330 so that the device 1300 may perform any process of the disclosure as discussed with reference to Figs. 2 to 12. The embodiments of the present disclosure may also be implemented by hardware or by a combination of software and hardware.

In some embodiments, the program 1330 may be tangibly contained in a computer readable medium which may be included in the device 1300 (such as in the memory 1320) or other storage devices that are accessible by the device 1300. The device 1300 may load the program 1330 from the computer readable medium to the RAM 1322 for execution. The computer readable medium may include any types of tangible non-volatile storage, such as ROM, EPROM, a flash memory, a hard disk, CD, DVD, and the like. Fig. 14 shows an example of the computer readable medium 1400 in form of CD or DVD. The computer readable medium has the program 1330 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 1300 as described above with reference to Figs. 2-12. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

The present disclosure comprises the following clauses.

Clause 1. An apparatus comprising: at least one processor; and at least one memory storing instructions that, when executed by the at least one processor, cause the apparatus at least to: obtain identities (IDs) assigned to L terminal devices, wherein the L terminal devices are assigned with K different IDs based on positions of the L terminal devices such that a group of N IDs identify a position range, at least one ID among the K different IDs is assigned to two or more terminal devices among the L terminal devices, and K is less than L; and receive, from N terminal devices among the L terminal devices, N IDs of the N terminal devices, the N IDs and positions of the N terminal devices being for determining a position of a target device, the target device being in the position range identified by the group of the N IDs.

Clause 2. The apparatus of clause 1, wherein the apparatus is a first apparatus, and the first apparatus is further caused to obtain the IDs assigned to the L terminal devices by at least one of the following: obtaining, from a second apparatus configured to assign the K different IDs to the L terminal devices, the IDs of the L terminal devices broadcasted by the second apparatus; obtaining, from the second apparatus, the IDs of the L terminal devices via an interface of the second apparatus; inquiring, from the second apparatus, the IDs of the L terminal devices through a signaling or a communication protocol between the first apparatus and the second apparatus; or obtaining the IDs of the L terminal devices pre-stored in the first apparatus.

Clause 3. The apparatus of clause 1 or 2, wherein the apparatus is caused to receive the N IDs by at least one of the following: receiving the N IDs via backscattered signals generated by the N terminal devices through backscattering an activation signal from the target device; receiving the N IDs via transmitted signals generated by the N terminal devices based on receiving the activation signal; or receiving the N IDs via signals actively transmitted by the N terminal devices.

Clause 4. The apparatus of clause 3, wherein the apparatus is the target device and is further caused to: prior to receiving the N IDs from the N terminal devices, transmit the activation signal to the N terminal devices.

Clause 5. The apparatus of any of clauses 1-4, wherein the K different IDs are assigned to the L terminal devices further such that a value of the K is minimized.

Clause 6. The apparatus of any of clauses 1-5, wherein the apparatus is further caused to at least one of the following: determine the position of the target device based on the N IDs and the positions of the N terminal device; transmit, to a further apparatus for determining the position of the target device, the obtained IDs assigned to the L terminal devices and the received N IDs of the N terminal devices; or transmit, to the further apparatus, the received N IDs of the N terminal devices.

Clause 7. The apparatus of any of clauses 1-6, wherein a value of the N is constant or variable for different position ranges.

Clause 8. The apparatus of any of clauses 1-7, wherein the IDs of the L terminal devices are arranged as one of the following: in a line, the group of N IDs being continuous N IDs; or in a grid, the group of N IDs being a subgrid corresponding to the position range.

Clause 9. The apparatus of clause 2, wherein the L terminal devices are L tags, the first apparatus is a terminal device or an access network device, and the second apparatus is a core network device or an information station.

Clause 10. An apparatus comprising: at least one processor; and at least one memory storing instructions that, when executed by the at least one processor, cause the apparatus at least to: assign K different identities (IDs) to L terminal devices based on positions of the L terminal devices such that a group of N IDs of N terminal devices identify a position range, wherein at least one ID among the K different IDs is assigned to two or more terminal devices among the L terminal devices, and K is less than L.

Clause 11. The apparatus of clause 10, wherein the K different IDs are assigned to the L terminal devices further such that a value of the K is minimized.

Clause 12. The apparatus of clause 10 or 11, wherein a value of the N is constant or variable for different position ranges.

Clause 13. The apparatus of any of clauses 10-12, wherein the apparatus is a second apparatus, and the second apparatus is further caused to at least one of the following: broadcast the IDs of the L terminal devices; provide, to a first apparatus or a further apparatus configured to determine a position of a target device, the IDs of the L terminal devices via an interface of the second apparatus; provide, to the first apparatus and based on inquiry from the first apparatus, the IDs of the L terminal devices through a signaling or a communication protocol between the first apparatus and the second apparatus.

Clause 14. The apparatus of any of clauses 10-13, wherein the IDs of the L terminal devices are arranged as one of the following: in a line, the group of N IDs being continuous N IDs; or in a grid, the group of N IDs being a subgrid corresponding to the position range.

Clause 15. The apparatus of clause 13, wherein the L terminal devices are L tags, the first apparatus is a terminal device or an access network device, and the second apparatus is a core network device or an information station.

Clause 16. A terminal device comprising: at least one processor; and at least one memory storing instructions that, when executed by the at least one processor, cause the terminal device at least to: provide, to an apparatus, an identity (ID) of the terminal device, wherein the terminal device is one of N terminal devices activated by an activation signal among L terminal devices, the L terminal devices are assigned with K different IDs based on positions of the L terminal devices such that a group of N IDs identify a position range, at least one ID among the K different IDs is assigned to two or more terminal devices among the L terminal devices, and K is less than L.

Clause 17. The terminal device of clause 16, wherein the terminal device is caused to provide the ID by at least one of the following: providing the ID via a backscattered signal generated by the terminal device through backscattering an activation signal from a target device; transmitting the ID via a transmitted signal generated by the terminal device based on receiving the activation signal; or transmitting the ID via a signal actively transmitted by the terminal device.

Clause 18. A method comprising: obtaining, at an apparatus, identities (IDs) assigned to L terminal devices, wherein the L terminal devices are assigned with K different IDs based on positions of the L terminal devices such that a group of N IDs identify a position range, at least one ID among the K different IDs is assigned to two or more terminal devices among the L terminal devices, and K is less than L; and receiving, from N terminal devices among the L terminal devices, N IDs of the N terminal devices, the N IDs and positions of the N terminal devices being for determining a position of a target device, the target device being in the position range identified by the group of the N IDs.

Clause 19. A method comprising: assigning, at an apparatus, K different identities (IDs) to L terminal devices based on positions of the L terminal devices such that a group of N IDs of N terminal devices identify a position range, wherein at least one ID among the K different IDs is assigned to two or more terminal devices among the L terminal devices, and K is less than L.

Clause 20. A method comprising: providing, at a terminal device and to an apparatus, an identity (ID) of the terminal device, wherein the terminal device is one of N terminal devices activated by the activation signal among L terminal devices, the L terminal devices are assigned with K different IDs based on positions of the L terminal devices such that a group of N IDs identify a position range, at least one ID among the K different IDs is assigned to two or more terminal devices among the L terminal devices, and K is less than L.

Clause 21. An apparatus comprising: means for obtaining identities (IDs) assigned to L terminal devices, wherein the L terminal devices are assigned with K different IDs based on positions of the L terminal devices such that a group of N IDs identify a position range, at least one ID among the K different IDs is assigned to two or more terminal devices among the L terminal devices, and K is less than L; and means for receiving, from N terminal devices among the L terminal devices, N IDs of the N terminal devices, the N IDs and positions of the N terminal devices being for determining a position of a target device, the target device being in the position range identified by the group of the N IDs.

Clause 22. An apparatus comprising: means for assigning K different identities (IDs) to L terminal devices based on positions of the L terminal devices such that a group of N IDs of N terminal devices identify a position range, wherein at least one ID among the K different IDs is assigned to two or more terminal devices among the L terminal devices, and K is less than L.

Clause 23. An apparatus comprising: means for providing, to an apparatus, an identity (ID) of a terminal device, wherein the terminal device is one of N terminal devices activated by the activation signal among L terminal devices, the L terminal devices are assigned with K different IDs based on positions of the L terminal devices such that a group of N IDs identify a position range, at least one ID among the K different IDs is assigned to two or more terminal devices among the L terminal devices, and K is less than L.

Clause 24. A non-transitory computer readable medium comprising program instructions that, when executed by an apparatus, cause the apparatus to perform at least the method of any of clauses 18-20.

## Claims

1. An apparatus comprising: means for obtaining identities (IDs) assigned to L terminal devices, wherein the L terminal devices are assigned with K different IDs based on positions of the L terminal devices such that a group of N IDs identify a position range, at least one ID among the K different IDs is assigned to two or more terminal devices among the L terminal devices, and K is less than L; and
means for receiving, from N terminal devices among the L terminal devices, N IDs of the N terminal devices, the N IDs and positions of the N terminal devices being for determining a position of a target device, the target device being in the position range identified by the group of the N IDs.

2. An apparatus comprising: means for assigning K different identities (IDs) to L terminal devices based on positions of the L terminal devices such that a group of N IDs of N terminal devices identify a position range, wherein at least one ID among the K different IDs is assigned to two or more terminal devices among the L terminal devices, and K is less than L.

3. An apparatus comprising: means for providing, to an apparatus, an identity (ID) of a terminal device, wherein the terminal device is one of N terminal devices activated by the activation signal among L terminal devices, the L terminal devices are assigned with K different IDs based on positions of the L terminal devices such that a group of N IDs identify a position range, at least one ID among the K different IDs is assigned to two or more terminal devices among the L terminal devices, and K is less than L.

4. The apparatus of claim 1, wherein the apparatus is a first apparatus, wherein the means are further configured to obtain the IDs assigned to the L terminal devices by at least one of the following: obtaining, from a second apparatus configured to assign the K different IDs to the L terminal devices, the IDs of the L terminal devices broadcasted by the second apparatus; obtaining, from the second apparatus, the IDs of the L terminal devices via an interface of the second apparatus; inquiring, from the second apparatus, the IDs of the L terminal devices through a signaling or a communication protocol between the first apparatus and the second apparatus; or obtaining the IDs of the L terminal devices pre-stored in the first apparatus.

5. The apparatus of claim 1 or 4, wherein the means are further configured to receive the N IDs by at least one of the following: receiving the N IDs via backscattered signals generated by the N terminal devices through backscattering an activation signal from the target device; receiving the N IDs via transmitted signals generated by the N terminal devices based on receiving the activation signal; or receiving the N IDs via signals actively transmitted by the N terminal devices.

6. The apparatus of claim 5, wherein the apparatus is the target device and the means for receiving are further configured to: prior to receiving the N IDs from the N terminal devices, transmit the activation signal to the N terminal devices.

7. The apparatus of any of claims 1 and 4 to 6, wherein the apparatus further comprises means for at least one of the following: determining the position of the target device based on the N IDs and the positions of the N terminal device; transmitting, to a further apparatus for determining the position of the target device, the obtained IDs assigned to the L terminal devices and the received N IDs of the N terminal devices; or transmitting, to the further apparatus, the received N IDs of the N terminal devices.

8. The apparatus of claim 2 or 4, wherein the L terminal devices are L tags, the first apparatus is a terminal device or an access network device, and the second apparatus is a core network device or an information station, the apparatus of claim 2 being the second apparatus.

9. The apparatus of any of claims 1-8, wherein the K different IDs are assigned to the L terminal devices further such that a value of the K is minimized.

10. The apparatus of any of claims 1-9, wherein a value of the N is constant or variable for different position ranges.

11. The apparatus of any of claims 1-10, wherein the IDs of the L terminal devices are arranged as one of the following: in a line, the group of N IDs being continuous N IDs; or in a grid, the group of N IDs being a subgrid corresponding to the position range.

12. The apparatus of any of claims 2 and 8-11, wherein the apparatus is a second apparatus, and the second apparatus further comprises: means to broadcast the IDs of the L terminal devices; means to provide, to a first apparatus or a further apparatus configured to determine a position of a target device, the IDs of the L terminal devices via an interface of the second apparatus; means to provide, to the first apparatus and based on inquiry from the first apparatus, the IDs of the L terminal devices through a signaling or a communication protocol between the first apparatus and the second apparatus.

13. The apparatus of claim 3 and 9 to 11, wherein the means are configured to provide the ID by at least one of the following: providing the ID via a backscattered signal generated by the terminal device through backscattering an activation signal from a target device; transmitting the ID via a transmitted signal generated by the terminal device based on receiving the activation signal; or transmitting the ID via a signal actively transmitted by the terminal device.

14. A method comprising:
obtaining, at an apparatus, identities (IDs) assigned to L terminal devices, wherein the L terminal devices are assigned with K different IDs based on positions of the L terminal devices such that a group of N IDs identify a position range, at least one ID among the K different IDs is assigned to two or more terminal devices among the L terminal devices, and K is less than L; and
receiving, from N terminal devices among the L terminal devices, N IDs of the N terminal devices, the N IDs and positions of the N terminal devices being for determining a position of a target device, the target device being in the position range identified by the group of the N IDs.

15. A computer program product comprising processor executable instructions for causing an apparatus for performing the training method of claim 14.
